# EUROPÄISCHE PATENTSCHRIFT

(11) **EP 0 677 680 B1**
(45) Veröffentlichungstag und Bekanntmachung des Hinweises auf die Patenterteilung: **17.06.1998**
(21) Anmeldenummer: 95104427.0
(22) Anmeldetag: 25.03.1995
(51) Int. Cl.: F16F 15/131

(54) **Zweimassenschwungrad für eine Brennkraftmaschine**
Double-mass flywheel for an internal combustion engine
Double volant amortisseur pour un moteur à combustion interne

(30) Priorität: 13.04.1994 DE 4412723
(43) Veröffentlichungstag der Anmeldung: 18.10.1995
(73) Patentinhaber: J.M. Voith GmbH, D-89522 Heidenheim (DE)
(72) Erfinder: Twisselmann, Hark, D-89522 Heidenheim (DE); Hanke, Wolfgang, D-89518 Heidenheim (DE)
(74) Vertreter: Weitzel, Wolfgang, Dr.-Ing. Patentanwalt

(56) Entgegenhaltungen:
- DE-A- 2 616 637
- DE-A- 3 448 480
- DE-A- 4 239 770
- GB-A- 2 226 100

## Beschreibung

Die Erfindung betrifft ein Zweimassenschwungrad für eine Brennkraftmaschine gemäß dem Oberbegriff von Anspruch 1. Auf DE 34 48 480 A1 wird verwiesen.

Zweimassenschwungräder sind Zubehör-Komponenten für Kraftfahrzeuge. Sie dienen der Erhöhung des Fahrkomforts, indem sie eine Übertragung von Drehschwingungen vom Motor auf das Getriebe weitgehend unterbinden. In dieser Eigenschaft wird von ihnen eine einwandfreie technische Funktion verlangt. Sie sind aber auch zugleich ein Massenartikel. Bei dem hart umkämpften Zubehörgeschäft kommt es im besonderen Maße auf eine kostengünstige Fertigung an. Dabei muß die einwandfreie Funktion stets gewährleistet sein.

Einer der neuralgischen Punkte von Zweimassenschwungrädern ist das Lager und dessen Umfeld. Beim gattungsgemäßen Zweimassenschwungrad sind Primärmasse und Sekundärmasse durch ein einziges Lager aufeinander gelagert. Deswegen kommt diesem Lager besondere Bedeutung zu. Seine Positionierung und Fixierung ist entscheidend für den einwandfreien Betrieb und die lange Lebensdauer der gesamten Komponente.

Die bekannten Ausführungsformen lassen gerade bezüglich Fixierung und Positionierung des Innenringes des Lagers noch Wünsche offen. Beim gattungsgemäßen, vorbekannten Zweimassenschwungrad ist der Innenring des genannten, einzigen Lagers eingespannt zwischen einer der Primärmasse angedrehten Anschlagfläche, die achssenkrecht verläuft, sowie der in Anspruch 1 genannten Haltescheibe. Die Haltescheibe ihrerseits ist am Zweimassenschwungrad - und zwar an dessen Nabe - durch Schrauben befestigt. Diese Ausführungsform ist zum einen teuer. So muß die Haltescheibe mit Bohrungen für die Schrauben versehen sein, und zwar mit Anfasungen für Senkkopfschrauben. Die Nabe der Primärmasse muß mit entsprechenden Gewindebohrungen zur Aufnahme der Senkkopfschrauben versehen sein. Dabei ist größte Sorgfalt auf die richtige Positionierung der Bohrungen sowie der mit diesen fluchtenden Gewindebohrungen zu legen. Dies ist aufwendig, und verteuert somit die Herstellung. Die Fertigungsgenauigkeit läßt zu wünschen übrig, was sich in ungünstigen Fällen auf die Lebensdauer des Lagers und damit der gesamten Komponente nachteilig auswirken kann. Der Erfindung liegt die Aufgabe zugrunde, ein Zweimassenschwungrad gemäß dem Oberbegriff von Anspruch 1 derart zu gestalten, daß die Fertigungskosten in Bezug auf Gestaltung und Befestigung der Haltescheibe gesenkt werden können, daß die Lebensdauer der Komponente verbessert wird, und daß die Funktion der Komponente dennoch einwandfrei ist.

Diese Aufgabe wird durch die kennzeichnenden Merkmale von Anspruch 1 gelöst.

Die Erfinder haben erkannt, daß sich das an sich bekannte sogenannte Part-Shearing in vorzüglicher Weise im vorliegenden Falle einsetzen läßt. Die erzielbaren Toleranzen sind um eine Zehnerpotenz höher als bei dem bekannten Verschrauben. Ungenauigkeiten, die notwendiger Weise mit dem Herstellen von Schraubverbindungen verbunden sind, scheiden aus. Das umständliche - und die Genauigkeit abermals beeinträchtigende - Anbringen der Fasen für die Senkköpfe der Schrauben unterbleibt völlig. Die erzielbare Herstellungsgenauigkeit ist somit optimal.

Außerdem sind die Kosten einer solchen "Part-Shearing"-Verbindung erheblich niedriger, als diejenigen der bekannten Schraubverbindung. Entscheidend ist hierbei, daß sich die durch Part-Shearing erzeugten Zapfen in ein und demselben Arbeitsgang mit dem Herstellen jener Bohrungen in der Haltescheibe verwirklichen läßt, welche benötigt werden, um Durchsteckschrauben zum Befestigen der Primärmasse an der Kurbelwelle hindurchzuführen. Die Bearbeitung der Scheibe wird mit einem Feinschneidwerkzeug durchgeführt, bei gleichzeitigem Ausdrücken der Befestigungszapfen. Dies führt zu Genauigkeiten im Hundertstel-Millimeter-Bereich.

Die Bohrungen in der Nabe zur Aufnahme der Zapfen der Scheibe können grundsätzlich Durchgangsbohrungen sein. Sackbohrungen sind jedoch demgegenüber zu bevorzugen. Bei Sackbohrungen muß lediglich dafür gesorgt werden, daS zwischen dem Innenraum der Sackbohrung und der Umgebung eine luft-leitende Verbindung herrscht. Geschieht dies nicht, so dehnt sich die in der Sackbohrung eingeschlossene Luft beim Betrieb aus und wirkt in nachteiliger Weise auf die Stirnfläche der Zapfen.

Die erfindungsgemäße Part-Shearing-Verbindung ist nicht nur gegenüber einer Schraubverbindung viel günstiger, sie ist auch Nietverbindungen weit überlegen.

Die Erfindung ist anhand der Zeichnung näher erläutert. Darin ist im einzelnen folgendes dargestellt:

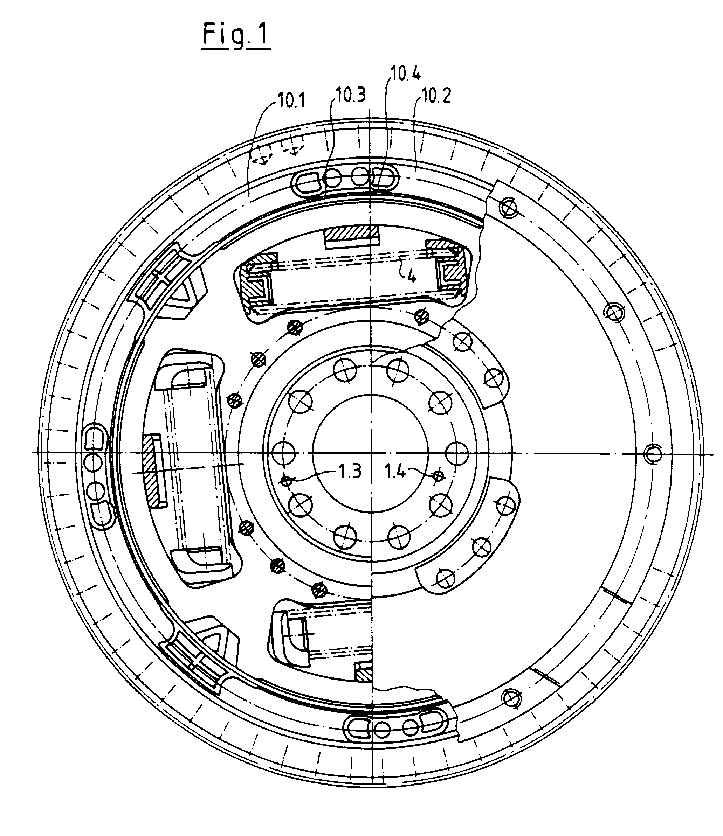

Figur 1 zeigt eine Draufsicht auf ein erfindungsgemäßes Zweimassenschwungrad, von der Motorseite her gesehen, teilweise ausgebrochen und im Schnitt.

Figur 2 zeigt das Zweimassenschwungrad gemäß Figur 1 in einem Axialschnitt.

Figur 3 zeigt in vergrößerter Darstellung einen Ausschnitt aus Figur 2.
Man erkennt aus den Figuren im einzelnen folgendes:

Eine motorseitige Schwungmasse (Primärmasse) 1 arbeitet mit einer getriebeseitigen Schwungmasse (Sekundärmasse) 2 zusammen. Die beiden Schwungmassen 1, 2 sind über einen Zwischenflansch 3 miteinander in der nachfolgend beschriebenen Weise verbunden. Im radial äußeren Bereich ist eine drehelastische Verbindung zwischen der Primärmasse 1 und dem Zwischenflansch 3 durch Schraubenfedern 4 hergestellt. Diese sind wenigstens annähernd auf ein und demselben Radius angeordnet. Im radial inneren Bereich ist eine drehfeste Verbindung (d.h. eine formschlüssige Verbindung) zwischen dem Zwischenflansch 3 und der Sekundärmasse 2 durch Nietbolzen 5 hergestellt.

Die beiden Schwungmassen 1, 2 sind durch ein einziges Wälzlager 6 radial und axial gegeneinander gelagert. Der Innenring 6.1 des Lagers liegt einerseits an einer achssenkrechten Fläche 1.1 der Primärmasse 1 an, andererseits an dem Umfangsbereich einer Haltescheibe 7.

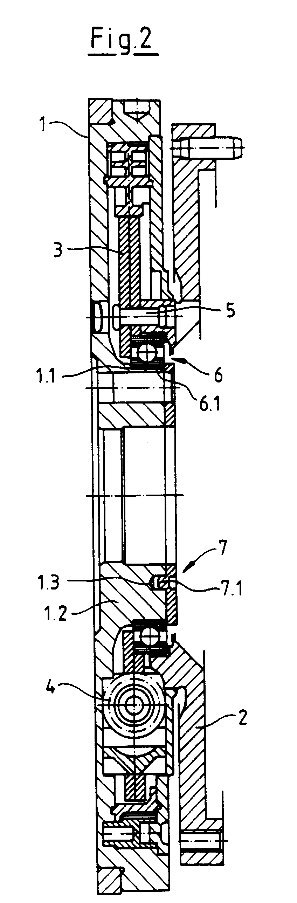

Die Haltescheibe ist gemäß der Erfindung auf die folgende Weise an der Nabe 1.2 der Primärmasse 1 befestigt: Die Primärmasse 1 weist zwei Sackbohrungen 1.3, 1.4 auf. Die Haltescheibe 7 hingegen weist entsprechende Zapfen 7.1 auf, die durch sogenanntes Part-Shearing aus dem Fleisch der Haltescheibe 7 herausgedrückt und in die Sackbohrungen 1.3, 1.4 im Preßsitz eingesetzt sind. Man beachte, daß die beiden Bohrungen 1.3, 1.4 der Primärmasse 1 auf verschiedenen Radien liegen. Sie sind außerdem einander nicht diametral gegenüber angeordnet. Die betreffenden Zapfen 7.1 der Haltescheibe 7, von denen in Figur 2 nur ein einziger erkennbar ist, sind entsprechend angeordnet, indem sie mit den Bohrungen 1.3, 1.4 fluchten. Auf diese Weise ist ein narrensicheres Montieren gewährleistet.

Es versteht sich, daß das Zweimassenschwungrad, wie dem Fachmann bekannt, weitere notwendige Bestandteile umfaßt. So ist beispielsweise eine Dämpfungseinrichtung vorgesehen, und zwar in Gestalt von gefüllten Räumen 10.1, 10.2. Das in diesen Räumen enthaltene Dämpfungsmedium wird beim gegenseitigen Verdrehen der beiden Schwungmassen 1, 2 durch enge Spalte 10.3, 10.4 hindurchgepreßt, wodurch die Dämpfungswirkung eintritt.

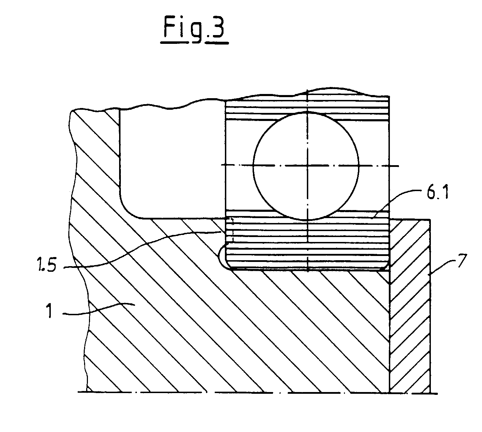

In Figur 3 erkennt man die Gestaltung der Nabe der Primärmasse 1. Sie weist einen Ringwulst 1.5 auf, gegen den sich die Stirnfläche von Innenring 6.1 des Lagers 6 abstützt. Der Ringwulst 1.5 wird beim Einpressen der Zapfen 7.1 in die entsprechenden Bohrungen 1.3, 1.4 der Primärmasse 1 gestaucht, so daß Innenring 6.1 zuverlässig zwischen Primärmasse 1 und Haltescheibe 7 fixiert ist.

Es versteht sich, daß der Ringwulst 1.5 auch eine andere Gestalt haben könnte - in einem Axialschnitt gesehen. Er muß nicht unbedingt rund sein, sondern könnte auch dreieckig sein, wobei eine Spitze des Wulstes vor dem Einpressen der Zapfen 7.1 von Haltescheibe 7 gegen die eine Stirnfläche des Innenringes 6.1 weist.

## Patentansprüche

1. Zweimassenschwungrad für eine Brennkraftmaschine mit den folgenden Merkmalen:
1.1 eine als Primärmasse (1) bezeichnete motorseitige und eine als Sekundärmasse (2) bezeichnete getriebeseitige Schwungmasse
1.2 beide Schwungmassen (1, 2) sind unter Zwischenschaltung von elastischen Gliedern (4) gegeneinander begrenzt verdrehbar
1.3 zwischen den beiden Schwungmassen (1, 2) und parallel zu den elastischen Gliedern ist eine Dämpfungseinrichtung (10) geschaltet
1.4 die beiden Schwungmassen (1, 2) sind durch ein Wälzlager (6) radial und axial gegeneinander gelagert
1.5 der Innenring (6.1) des Wälzlagers (6) ist zwischen einer Anschlagfläche (1.1) der Primärmasse (1) und einer Haltescheibe (7) eingespannt, die an der abtriebseitigen Stirnfläche der Primärmasse (1) befestigt ist
gekennzeichnet durch die folgenden Merkmale:
1.6 die Haltescheibe (7) ist mit wenigstens zwei Zapfen (7.1) versehen, die durch Herausdrücken aus der Haltescheibe (7) nach ein und derselben Seite der Haltescheibe (7) geschaffen sind
1.7 die Stirnfläche der Nabe (1.2) der Primärmasse (1) ist mit Bohrungen (1.3, 1.4) zur Aufnahme der Zapfen (7.1) versehen
1.8 die Zapfen (7.1) sind im Preßsitz in die Bohrungen (1.3, 1.4) eingesetzt.

2. Zweimassenschwungrad nach Anspruch 1, gekennzeichnet durch die folgenden Merkmale:
2.1 die Bohrungen (1.3, 1.4) sind Sackbohrungen
2.2 zwischen dem Innenraum der Sackbohrungen und der Umgebung ist eine leitende Verbindung vorgesehen.

3. Zweimassenschwungrad nach Anspruch 2, dadurch gekennzeichnet, daß die luftleitenden Verbindungen dadurch geschaffen sind, daß den Zapfen zu ihren Achsen parallele ebene Flächen angeformt sind.

4. Zweimassenschwungrad nach Anspruch 1 oder 2, dadurch gekennzeichnet, daß die Zapfen (7.1) und die Bohrungen (1.3, 1.4) auf verschiedenen Radien, und in Bezug auf eine Diametrallinie versetzt gegeneinander angeordnet sind.

5. Zweimassenschwungrad nach einem der Ansprüche 1 bis 4, dadurch gekennzeichnet, daß die aus der Primärmasse (1) gebildete Anschlagfläche (1.1) einen Ringwulst aufweist.

## Claims

1. Twin-mass flywheel for an internal combustion engine with the following features:
1.1 a flywheel mass designated as the primary mass (1) in the engine side and a flywheel mass designated as the secondary mass (2) on the transmission side
1.2 both flywheel masses (1, 2) are able to rotate to a limited extent with respect to each other with the interposition of resilient members (4)
1.3 a damping device (10) is inserted between the two flywheel masses (1, 2) and parallel to the resilient members
1.4 the two flywheel masses (1, 2) are mounted radially and axially with respect to each other by a roller bearing (6)
1.5 the inner ring (6.1) of the roller bearing (6) is clamped between an abutment surface (1.1) of the primary mass (1) and a retaining disc (7), which is attached to the end face of the primary mass (1) on the output side
characterised by the following features:
1.6 the retaining disc (7) is provided with at least two pins (7.1), which are created by pushing-out from the retaining disc (7) towards one and the same side of the retaining disc (7)
1.7 the end face of the hub (1.2) of the primary mass (1) is provided with bores (1.3, 1.4) for receiving the pins (7.1)
1.8 the pins (7.1) are inserted with a press fit in the bores (1.3, 1.4).

2. Twin-mass flywheel according to Claim 1, characterised by the following features:
2.1 the bores (1.3, 1.4) are blind bores
2.2 a conducting connection is provided between the interior of the blind bores and the environment.

3. Twin-mass flywheel according to Claim 2, characterised in that the air-conducting connections are created due to the fact that flat surfaces are integrally formed on the pins parallel to their axes.

4. Twin-mass flywheel according to Claim 1 or 2, characterised in that the pins (7.1) and the bores (1.3, 1.4) are located on different radii and offset with respect to each other in relation to a diametral line.

5. Twin-mass flywheel according to one of Claims 1 to 4, characterised in that the abutment surface (1.1) formed from the primary mass (1) comprises an annular bead.

## Revendications

1. Volant à deux masses, pour moteur à combustion interne, comportant les particularités suivantes :
1.1 une masse de volant côté moteur, appelée masse primaire (1), et une masse de volant côté boîte de vitesses, appelée masse secondaire (2),
1.2 les deux masses de volant (1, 2) peuvent faire l'objet d'un décalage angulaire d'une manière limitée l'une par rapport à l'autre moyennant l'interposition d'organes élastiques (4),
1.3 un dispositif d'amortissement (10) est interposé entre les deux masses de volant (1, 2) et en parallèle par rapport aux organes élastiques,
1.4 les deux masses de volant (1, 2) sont montées à palier radialement et axialement l'une par rapport à l'autre au moyen d'un palier de roulement (6),
1.5 la bague intérieure (6.1) du palier de roulement (6) est serrée entre une surface de butée (1.1) de la masse primaire (1) et un disque de maintien (7) qui est fixé sur la surface frontale de la masse primaire (1) qui est située du côté de la sortie d'entraînement,
caractérisé par les particularités suivantes :
1.6 le disque de maintien (7) est pourvu d'au moins deux tétons (7.1) qui sont réalisés par repoussage à partir du disque de maintien (7) vers un seul et même côté du disque de maintien (7),
1.7 la surface frontale du moyeu (1.2) de la masse primaire (1) est pourvue de perçages (1.3, 1.4) destinés à recevoir les tétons (7.1),
1.8 les tétons (7.1) sont enfoncés en ajustement serré dans les perçages (1.3, 1.4).

2. Volant à deux masses suivant la revendication 1, caractérisé par les particularités suivantes :
2.1 les perçages (1.3, 1.4) sont des perçages borgnes,
2.2 une liaison de communication est prévue entre la cavité des perçages borgnes et le milieu environnant.

3. Volant à deux masses suivant la revendication 2, caractérisé en ce que les liaisons de communication d'air sont réalisées en façonnant sur les tétons des surfaces planes parallèles à leurs axes.

4. Volant à deux masses suivant la revendication 1 ou 2, caractérisé en ce que les tétons (7.1) et les perçages (1.3, 1.4) sont disposés suivant des lignes circonférentielles différentes et d'une manière mutuellement décalée par rapport à une ligne diamétrale.

5. Volant à deux masses suivant l'une des revendications 1 à 4, caractérisé en ce que la surface de butée (1.1) formée à partir de la masse primaire (1) comporte une nervure annulaire.
